# EUROPÄISCHE PATENTSCHRIFT

(11) **EP 0 853 022 B1**
(45) Veröffentlichungstag und Bekanntmachung des Hinweises auf die Patenterteilung: **28.12.2005**
(21) Anmeldenummer: 97120842.6
(22) Anmeldetag: 27.11.1997
(51) Int. Cl.: B60Q 1/14

(54) **Funktionsmodul für Kraftfahrzeuge**
Vehicle function module
Module de fonction pour véhicule.

(30) Priorität: 02.12.1996 DE 19649857
(43) Veröffentlichungstag der Anmeldung: 15.07.1998
(73) Patentinhaber: Leopold Kostal GmbH & Co. KG, 58507 Lüdenscheid (DE)
(72) Erfinder: Hoffmann, Ernst Wilhelm, 58849 Herscheid (DE); Welschholz, Jörg, 58849 Herscheid (DE); Manz, Rüdiger, 58644 Iserlohn (DE)

(56) Entgegenhaltungen:
- DE-A- 3 532 532
- DE-C- 3 426 949
- GB-A- 2 152 289

## Beschreibung

Die vorliegende Erfindung geht von einem entsprechend dem Oberbegriff des Hauptanspruches konzipierten Funktionsmodul für Kraftfahrzeuge aus.

Derartige Funktionsmodule sind dafür vorgesehen, der Lenksäule eines Kraftfahrzeuges auf einfache Art und Weise eine Vielzahl von Funktionseinheiten zuordnen zu können. Die Funktionseinheiten eines solchen Funktionsmodules können z.B. als elektrische Schalter ausgeführt sein, um durch deren Betätigung verschiedene am Kraftfahrzeug zu realisierende Funktionen wie z.B. Stand-/Fahrlicht, Fahrtrichtungsanzeige, Wischen/Waschen, zu initiieren.

Durch die DE 28 10 790 B2 ist ein dem Oberbegriff des Hauptanspruches entsprechendes Funktionsmodul für Kraftfahrzeuge bekanntgeworden. Dieses Funktionsmodul besteht im wesentlichen aus einem an dem Mantelrohr der Lenksäule festlegbaren Träger, an dem mehrere jeweils als elektrische Schalter ausgeführte Funktionseinheiten festlegbar sind. Die als elektrische Schalter ausgeführten Funktionseinheiten sind jeweils mit einem Steckverbinderteil versehen und über eine entsprechende Anzahl von Anschlußverbinderteilen an das Bordnetz des Kraftfahrzeuges angeschlossen. Oftmals sollen aber bei modernen Kraftfahrzeugbordnetzen dem Träger eines solchen Funktionsmodules bestimmte Funktionseinheiten lediglich optional zugeordnet werden. D.h. der Käufer eines Kraftfahrzeuges kann zusätzlich zur Basisausstattung nach seinem persönlichen Geschmack Zusatzausstattungen hinzuwählen. Die Funktionen solcher Zusatzausstattungen sind dann über Satellitenfunktionseinheiten realisierbar, die dem Träger bedarfsweise zugeordnet werden. Dies bedeutet, daß zur funktionalen Anbindung eines solchen Funktionsmodules an das Bordnetz eines Kraftfahrzeuges mehrere und ggf. auch in ihrer Ausbildung verschiedene Anschlußverbinderteile notwendig sind, die mehreren ggf. verschiedenen Steckverbinderanordnungen zugeordnet werden müssen. Im Bereich der Lenksäule ist jedoch das Händeln von mehreren Anschlußverbinderteilen nicht nur lästig, sondern auch mit einem erheblichen Aufwand und der Gefahr von Verwechslungen verbunden.

Außerdem ist durch die DE 44 27 883 C1 eine Einrichtung für Kraftfahrzeuge bekannt geworden, die mehrere Schalter, eine Signalübertragungsvorrichtung und eine auf einer Leiterplatte angeordnete Sensoreinrichtung aufweist. Die Leiterplatte steht unmittelbar mit den Schaltern elektrisch in Verbindung. Ferner ist ein zentraler Anschlußbereich an der Einrichtung vorgesehen der zur elektrischen Verbindung mit dem Kraftfahrzeugbordnetz dient.

Der vorliegenden Erfindung liegt deshalb die Aufgabe zugrunde, ein Funktionsmodul derart weiterzubilden, so daß unabhängig von dessen Auslegung, d.h. ausgehend von einer minimalen bis zur maximal möglichen Bestückung mit Satellitenfunktionseinheiten der Anschluß des Funktionsmodules an das Bordnetz des Kraftfahrzeuges auf einfache Art und Weise über möglichst wenige, an zentraler Stelle anzubringender Anschlußverbinderteile realisierbar ist.

Erfindungsgemäß wird die Aufgabe durch die im kennzeichnenden Teil des Hauptanspruches angegebenen Merkmale gelöst. Bei einem derartigen Aufbau ist besonders vorteilhaft, daß die zur internen Kopplung des Funktionsmodules notwendigen Steckverbinderteile bzw. Gegensteckverbinderteile direkt an den Funktionseinheiten bzw. an dem Verteilungsgerät vorhanden sind, so daß bei der Montage des Funktionsmodules ein Hantieren von an biegeschlaffen Leitungen angeschlossenen Steckverbinderteilen völlig entfällt und über die Steckverbinderteile gleichzeitig eine mechanische Verbindung zwischen den Funktionsmodulen und dem Verteilungsgerät entsteht.

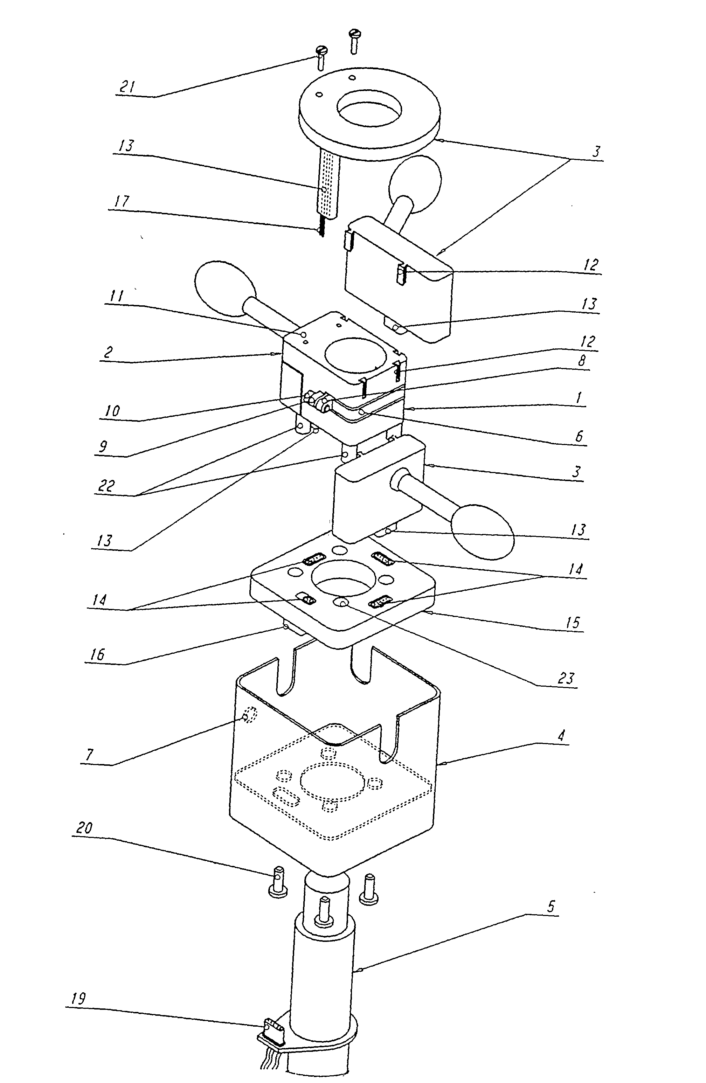

Weitere vorteilhafte Ausgestaltungen des erfindungsgemäßen Gegenstandes sind in den Unteransprüchen angegeben und werden anhand eines in der Zeichnung dargestellten Ausführungsbeispieles näher erläutert. Dabei zeigt die Zeichnung prinziphaft den Aufbau eines Funktionsmodules in explosionsartiger Darstellung.

Wie aus der Zeichnung hervorgeht, besteht ein solches Funktionsmodul für Kraftfahrzeuge im wesentlichen aus einem Träger 1, an welchem eine Basisfunktionseinheit 2 und mehrere Satellitenfunktionseinheiten 3 festlegbar sind, wobei der Träger 1 und somit das Funktionsmodul über eine Befestigungseinrichtung am Mantelrohr 5 der Lenksäule festlegbar ist.

Wie desweiteren aus der Zeichnung hervorgeht, ist die Befestigungseinrichtung schellenartig ausgebildet und einstückig in den Träger 1 integriert. Dazu ist in den aus Zink-Druck-Guß bestehenden Träger 1 eine sich in Umfangsrichtung des Mantelrohres 5 erstreckende Zunge 6 eingeformt. Die Zunge 6 kann über eine zugeordnete Schraube 10 angezogen werden. Zu diesem Zweck befindet sich an dem freien Ende der Zunge 6 ein senkrecht von dieser abstehender, mit einer Gewindebohrung versehener erster Befestigungsbock 8 und gegenüberliegend am Träger 1 ein ebenfalls senkrecht von diesem abstehender zweiter Befestigungsbock 9. Die beiden Befestigungsböcke 8,9 sind einander beabstandet zugeordnet, so daß über ein Betreiben der angebrachten Schraube 10 ein Anziehen der Zunge 6 erreicht wird, womit erhebliche Klemmkräfte auf das Mantelrohr 5 aufgebracht werden. Ein einfaches und sicheres Festlegen des Trägers 1 bzw. des Funktionsmodules am Mantelrohr 5 ist somit gewährleistet.

Einstückig ist außerdem an den Träger 1 ein Teilabschnitt 11 des Gehäuses der Basisfunktionseinheit 2 angeformt. Die Basisfunktionseinheit 2 ist somit quasi Bestandteil des Trägers 1, d.h. nach dem Anbringen ist diese nicht ohne größeren Aufwand wieder vom Träger 1 zu lösen. Die Satellitenfunktionseinheiten 3 hingegen können über Halteelemente 12 schnell und einfach wieder lösbar am Träger 1 befestigt werden. Muß ggf. eine der Satellitenfunktionseinheiten 3 ausgetauscht werden, oder aber besteht der Bedarf optional eine oder mehrere Satellitenfunktionseinheiten 3 zur Basisfunktionseinheit 2 hinzuzufügen, so ist das ohne großen Aufwand möglich. Auch ein Hinzufügen von Satellitenfunktionseinheiten 3 zu einem späteren Zeitpunkt, d.h. nach dem Einbau ins Kraftfahrzeug ist ohne großen Aufwand zu realisieren.

Im vorliegenden Ausführungsbeispiel sind die Halteelemente 12 des Trägers 1 und von zwei der drei gezeigten Satellitenfunktionseinheiten 3 als schwalbenschwanzförmige Nuten und Federn ausgebildet. Die als Nuten und Federn ausgebildeten Halteelemente 12 verlaufen in Längsrichtung des Mantelrohres 5, so daß die beiden Satellitenfunktionseinheiten 3 zur Befestigung von der dem Lenkrad zugewandten Seite auf den Träger 1 bzw. auf die Basisfunktionseinheit 2 aufgeschoben werden können. Eine der drei Satellitenfunktionseinheiten 3 ist über zwei Schrauben 21 an der dem Lenkrad zugewandten Oberseite des Trägers 1 festlegbar. Genausogut ist aber eine Befestigung der drei gezeigten Satellitenfunktionseinheiten 3 lediglich unter Verwendung von Schraubverbindungen oder aber Nut- und Federverbindungen am Träger 1 möglich. Im gezeigten Ausführungsbeispiel werden die beiden mit Federn versehenen Satellitenfunktionseinheiten 3 letztendlich durch das Anbringen der einen über die beiden Schrauben 21 am Träger 1 zu befestigende Satellitenfunktionseinheit 3 in ihrer Position am Träger 1 festgelegt. Dies ist deshalb der Fall, weil diese Satellitenfunktionseinheit 3 die dem Lenkrad zugewandten Seiten der beiden anderen Satellitenfunktionseinheiten 3 überdecken, wodurch diese nicht mehr vom Träger 1 entfernt werden können.

Sowohl die Basisfunktionseinheit 2 als auch die drei Satellitenfunktionseinheiten 3 weisen an ihrer dem Lenkrad abgewandten Seite jeweils ein Steckverbinderteil 13 auf. Die vier Steckverbinderteile 13 sind zur direkten Kopplung von jeweils einem Gegensteckverbinderteil 14 vorgesehen, welche Bestandteile eines ebenfalls am Träger 1 festlegbaren Verteilungsgerätes 15 sind. Die Gegensteckverbinderteile 14 sind mit ihrem Steckgesicht an der dem Lenkrad zugewandten Oberseite des plattenförmigen Verteilungsgerätes 15 vorhanden. Somit ist durch einfaches Aufstecken der Basisfunktionseinheit 2 bzw. der drei Satellitenfunktionseinheiten 3 eine Kopplung zwischen den angebrachten Steckverbinderteilen 13 und den Gegensteckverbinderteilen 14 des Verteilungsgerätes 15 möglich. Die Steckkontaktelemente 13 der drei Satellitenfunktionseinheiten 3 sowie der Basisfunktionseinheit 2 sind jeweils von einem Schutzkragen umgeben. Diese Schutzkragen sind jeweils dafür vorgesehen, um eine formschlüssige mechanische Verbindung zum Verteilungsgerät 15 herzustellen. Zu diesem Zweck weisen die vier Gegensteckverbinderteile 14 des Verteilungsgerätes 15 jeweils einen ihre Gegensteckkontaktelemente umgebenden Graben auf, in welchen jeweils ein Schutzkragen eines der vier Steckverbinderteile 13 zu liegen kommt. Mit dem Koppeln wird somit gleichzeitig auf einfache Art und Weise eine formschlüssige mechanische Verbindung zwischen den Funktionseinheiten 2,3 und dem Verteilungsgerät 15 hergestellt. An der dem Lenkrad abgewandten Unterseite des Verteilungsgerätes 15 ist eine Steckverbinderanordnung 16 vorhanden, welche zur Kopplung eines einzigen mit dem Bordnetz des Kraftfahrzeuges in Verbindung stehenden Anschlußverbinderteiles 19 vorgesehen ist. Somit umfaßt die an der Unterseite des Verteilungsgerätes 15 vorhandene Steckverbinderanordnung 16 alle zur Verbindung mit dem Bordnetz notwendigen Steckkontaktelemente.

Eine der drei Satellitenfunktionseinheiten 3 weist ein Steckverbinderteil 13 auf, welches zwei Steckkontaktelemente 17 enthält, die ohne Unterbrechung direkt in die an der Unterseite des Verteilungsgerätes 15 vorhandene Steckverbinderanordnung 16 geführt sind. Diese beiden Steckkontaktelemente 17 sind jeweils direkt durch ein zu dem Anschlußverbinderteil 19 zugehöriges Gegensteckkontaktelement kontaktierbar. Dies ist bei diesen beiden Steckkontaktelementen 17 deshalb der Fall, weil diese zur Kontaktierung des Airbags vorgesehen sind, dessen Anbindung aus Sicherheitsgründen eine möglichst hohe Zuverlässigkeit aufweisen muß.

Zur Erstellung des Funktionsmodules wird zunächst das Verteilungsgerät 15 in das Gehäuse 4 eingesetzt. Über der Einfachheit halber lediglich als Unsichtbare dargestellte, im Innenbereich des Gehäuses 4 angeformte Halteelemente wird das Verteilungsgerät 15 vorfixiert im Gehäuse 4 gehalten. Als nächstes wird der Träger 1 mit der Basisfunktionseinheit 2 in das Gehäuse 4 eingeführt. Dabei greifen vier an die dem Lenkrad abgewandte Unterseite des Trägers 1 angeformte Dome 22 in vier entsprechend im Verteilungsgerät 15, sowie in den Halteelementen des Gehäuses 4 vorhandene Durchbrüche 23 ein. Gleichzeitig wird das Steckverbinderteil 13 der Basisfunktionseinheit 2 mit dem entsprechenden Gegensteckverbinderteil 14 des Verteilungsgerätes 15 gekoppelt, wobei der Schutzkragen des Steckverbinderteiles 13 formschlüssig in den Graben des Gegensteckverbinderteiles 14 eingreift. Über vier weitere Schrauben 20 wird dann das Gehäuse 4 und damit auch das Verteilungsgerät 15 entfixiert am Träger 1 festgelegt. Zu diesem Zweck befinden sich in den vier Domen 22 des Trägers 1 Gewindebohrungen, in welche die weiteren Schrauben 20 eingeschraubt werden. Danach werden die beiden mit den Federn versehenen Satellitenfunktionseinheiten 3 auf den Träger 1 aufgeschoben, wobei die Nut- und Federverbindungen eine Vorführung übernehmen und eine formschlüssige Anbindung sicherstellen. Letztendlich greifen die Federn vollständig in die Nuten des Trägers 1 ein und die Steckverbinderteile 13 der beiden Satellitenfunktionseinheiten 3 kommen mit den entsprechenden Gegensteckverbinderteilen 14 des Verteilungsgerätes 15 in Wirkverbindung. Auch hierbei greifen die an die Steckverbinderteile 13 angeformten Schutzkragen zur Herstellung einer zusätzlichen formschlüssigen Verbindung in die Gräben der beiden entsprechenden Gegensteckverbinderteile 14 ein.

Zuletzt wird die durch eine Verschraubung am Träger 1 festlegbare Satellitenfunktionseinheit 3 angebracht. Die Satellitenfunktionseinheit 3 wird dazu auf die dem Lenkrad zugewandte Oberseite des Trägers 1 aufgesetzt, wobei das zapfenförmig ausgebildete Steckverbinderteil 13 seitlich am Träger 1 vorbeigeführt und mit dem entsprechender Gegensteckverbinderteil 14 des Verteilungsgerätes 15 gekoppelt wird. Wie bereits beschrieben, werden dabei zwei Steckkontaktelemente 17 dieses Steckverbinderteiles 13 direkt in die an der Unterseite des Verteilungsgerätes 15 vorhandene Steckverbinderanordnung 16 geführt. Dies ist möglich, weil das entsprechende Gegensteckverbinderteil 14 der Steckverbinderanordnung direkt gegenüberliegend angeordnet ist. Auch bei diesem Steckverbinderteil 13 greift der angeformte Schutzkragen zur Herstellung einer formschlüssige Verbindung in einen Graben des entsprechenden Gegensteckverbinderteiles 14 des Verteilungsgerätes 15 ein. Zur Entfixierung der drei Satellitenfunktionseinheiten 3 wird dann letztendlich die zuletzt montierte Satellitenfunktionseinheit 3 über die beiden Schrauben 21 an der Oberseite des Trägers 1 befestigt.

Komplett vormontiert kann das Funktionsmodul dann am Mantelrohr 5 der Lenksäule befestigt werden. Zu diesem Zweck wird das komplette Funktionsmodul einfach auf das Mantelrohr 5 aufgeschoben, wobei durch entsprechend ausgebildete Führungselemente eine automatische Kopplung der an der Unterseite des Verteilungsgerätes 15 befindlichen Steckverbinderanordnung 16 mit dem ebenfalls am Mantelrohr 5 festgelegten Anschlußverbinderteil 19 stattfindet. Durch einfaches Aufschieben des kompletten Funktionsmodules auf das Mantelrohr 5 sind somit alle zum Anschluß an das Bordnetz des Kraftfahrzeuges notwendigen Verbindungen hergestellt. Zur Entfixierung des kompletten Funktionsmodules wird dann letztendlich ein Schraubendreher durch die im Gehäuse 4 befindliche Öffnung 7 eingeführt, um die Schraube 10 der Befestigungseinrichtung zu betreiben und den Träger 1 über Klemmung am Mantelrohr 5 festzulegen.

## Patentansprüche

1. Funktionsmodul mit mehreren im Bereich der Lenksäule eines Kraftfahrzeuges unterhalb des Lenkrades vorhandenen, in einer senkrecht zur Lenksäule verlaufenen Ebene angeordneten, von einem gemeinsamen Gehäuse umgebenen Funktionseinheiten, die sich aus einer über einen Träger (1) am Mantelrohr (5) der Lenksäule kraft- und/oder formschlüssig befestigten Basisfunktionseinheit (2) und zumindest einer weiteren am Träger befestigten Satellitenfunktionseinheit (3) zusammensetzen, wobei die einzelnen Funktionseinheiten über zugeordnete Anschlußverbinderteile mit dem Bordnetz verbunden sind, **dadurch gekennzeichnet, daß** am Träger (1) ein senkrecht zur Lenksäule ausgerichtetes, dieselbe zumindest partiell umgreifendes plattenförmiges Verteilungsgerät (15) festgelegt ist, welches mit seiner Oberseite der dem Lenkrad abgewandten Seite der Funktionseinheiten (2,3) zugeordnet ist und daß jeweils direkt an der dem Lenkrad abgewandten Seite der Funktionseinheiten (2,3) Steckverbinderteile (13) vorhanden sind, die mit an dem plattenförmigen Verteilungsgerät (15) direkt vorhandenen Gegensteckverbinderteilen (14) koppelbar sind und daß an der dem Lenkrad abgewandten Unterseite des Verteilungsgerätes (15) eine einzige Steckverbinderanordnung (16) vorhanden ist, welche alle zum Anschluß an das Bordnetz notwendigen Steckkontaktelemente aufweist.

2. Funktionsmodul nach Anspruch 1, **dadurch gekennzeichnet, daß** zumindest eine der Funktionseinheiten (2,3) zumindest ein Steckkontaktelement (17) enthält, welches ohne Unterbrechung direkt in die an der Unterseite des plattenförmigen Verteilungsgerätes (15) vorhandene Steckverbinderanordnung (16) geführt und direkt durch ein zum Anschlußverbinderteil (19) gehöriges Gegensteckkontaktelement kontaktierbar ist.

3. Funktionsmodul nach Anspruch 1 oder 2, **dadurch gekennzeichnet, daß** die an der Unterseite des plattenförmigen Verteilungsgerätes (15) vorhandene mehrere Steckkontaktelemente aufweisende Steckverbinderanordnung (16) zur Kopplung eines einzigen, mehrere Gegensteckkontaktelemente aufweisenden Anschlußverbinderteiles (19) vorgesehen ist.

4. Funktionsmodul nach einem der Ansprüche 1 bis 3, **dadurch gekennzeichnet, daß** zumindest eine der Funktionseinheiten (2,3) ein Steckverbinderteil (13) enthält, dessen Steckkontaktelemente von einem gemeinsamen Schutzkragen umgeben sind.

5. Funktionsmodul nach einem der Ansprüche 1 bis 4, **dadurch gekennzeichnet, daß** die Steckkontaktelemente des an der Unterseite des Verteilungsgerätes (15) vorhandenen Steckverbinderanordnung (16) von einem gemeinsamen Schutzkragen umgeben sind.

6. Funktionsmodul nach einem der Ansprüche 1 bis 5, **dadurch gekennzeichnet, daß** die Gegensteckkontaktelemente zumindest eines der Gegensteckverbinderteile (14) von einer Vertiefung umgeben sind.

7. Funktionsmodul nach einem der Ansprüche 1 bis 6, **dadurch gekennzeichnet, daß** der Träger (1) einstückig zumindest einen Teilabschnitt (11) des Gehäuses der Basisfunktionseinheit (2) bildet.

8. Funktionsmodul nach einem der Ansprüche 1 bis 7, **dadurch gekennzeichnet, daß** die Basisfunktionseinheit (2) als sogenannter einen Bedienhebel aufweisender Lenkstockschalter ausgeführt ist.

9. Funktionsmodul nach einem der Ansprüche 1 bis 8, **dadurch gekennzeichnet, daß** zumindest eine Satellitenfunktionseinheit (3) als ein Lenkwinkelsensor ausgeführt ist.

10. Funktionsmodul nach einem der Ansprüche 1 bis 9, **dadurch gekennzeichnet, daß** zumindest eine Satellitenfunktionseinheit (3) als eine sogenannte, u.a. die Airbag-Kontaktierung realisierende Spiralkabelkassette ausgeführt ist.

11. Funktionsmodul nach einem der Ansprüche 1 bis 10, **dadurch gekennzeichnet, daß** zumindest eine Satellitenfunktionseinheit (3) als ein zumindest ein tastenförmiges Bedienelement aufweisender Schalter ausgebildet ist.

12. Funktionsmodul nach einem der Ansprüche 1 bis 11, **dadurch gekennzeichnet, daß** das die Funktionseinheiten (2,3) umgebende Gehäuse (4) direkt am Träger (1) festgelegt ist.

13. Funktionsmodul nach einem der Ansprüche 1 bis 12, **dadurch gekennzeichnet, daß** einstückig an dem Träger (1) eine Klemmkräfte auf das Mantelrohr (5) ausübende, schellenartig ausgeführte, durch eine Schraube (10) betriebene Befestigungseinrichtung vorhanden ist.

14. Funktionsmodul nach Anspruch 13, **dadurch gekennzeichnet, daß** im Gehäuse (4) eine Öffnung (7) vorhanden ist, durch die zum Betreiben der Schraube (10) ein Schraubendreher hindurchführbar ist.

15. Funktionsmodul nach einem der Ansprüche 1 bis 14, **dadurch gekennzeichnet, daß** im Innenraum des plattenförmigen Verteilungsgerätes (15) zumindest eine mehrere Leiterbahnen aufweisende, die Verbindung zwischen den Funktionseinheiten (2,3) und dem Bordnetz des Kraftfahrzeuges herstellende Leiterplatte vorhanden ist.

16. Funktionsmodul nach Anspruch 15, **dadurch gekennzeichnet, daß** die Leiterplatte in sogenannter Stanzgittertechnik ausgeführt ist.

17. Funktionsmodul nach Anspruch 15, **dadurch gekennzeichnet, daß** die Leiterbahnen der Leiterplatte als kupferkaschierte Struktur ausgebildet sind.

18. Funktionsmodul nach einem der Ansprüche 15 bis 17, **dadurch gekennzeichnet, daß** der Leiterplatte des Verteilungsgerätes (15) mehrere elektronische Bauelemente zugeordnet sind.

19. Funktionsmodul nach Anspruch 18, **dadurch gekennzeichnet, daß** zumindest eines der elektronischen Bauelemente als Mikrocomputer ausgebildet ist.

20. Funktionsmodul nach einem der Ansprüche 1 bis 19, **dadurch gekennzeichnet, daß** das Verteilungsgerät (15) als sogenannter Busknoten ausgebildet ist und somit eine Anbindungsmöglichkeit an den Datenbus des Kraftfahrzeuges umfaßt.

## Claims

1. Functional module with several functional units that are provided below the steering wheel in the vicinity of the steering column of a motor vehicle and arranged on a level extending perpendicular to the steering column and enclosed by a common encasement, the functional units comprising a basic functional unit (2) that is attached to the steering column tube (5) in a non-positive and/or form-fit manner by way of a support (1), and at least one other satellite functional unit (3) attached to the support, with the individual functional units connected to the on-board system by means of assigned connecting elements
**characterised by** the fact that a plate-like distribution device (15) secured to the support (1) aligned perpendicular to the steering column and partially encompassing the same is assigned with its upper side to the side of the functional units (2, 3) facing away from the steering wheel and that plug-in connector constituents (13) are provided directly on the side of the functional units (2, 3) facing away from the steering wheel that can be coupled with mating connector constituents (14) provided directly on the plate-like distribution device (15) and that a single connector configuration (16) is provided on the underside of the distribution device (15) facing away from the steering wheel that features all the plug-in contact elements necessary for connecting to the on-board system.

2. Functional module according to Claim 1, **characterised by** the fact that at least one of the functional units (2, 3) contains at least one plug-in contact element (17) that is led uninterrupted directly to the connector configuration (16) provided on the underside of the plate-like distribution device (15) and can be contacted directly by a mating connector constituent that belongs to a terminal connector constituent (19).

3. Functional module according to Claim 1 or Claim 2, **characterised by** the fact that the connector configuration (16) that features several plug-in contact elements and is provided on the underside of the plate-like distribution device (15) is provided for the purpose of coupling a single terminal connector constituent (19) that features several mating plug-in contact elements.

4. Functional module according to any of Claims 1 to 3, **characterised by** the fact that at least one of the functional units (2, 3) contains a plug-in connector constituent (13) whose plug-in contact elements are encompassed by a common protective collar.

5. Functional module according to any of Claims 1 to 4, **characterised by** the fact that the plug-in contact elements of the connector configuration (16) provided on the underside of the distribution device (15) is encompassed by a common protective collar.

6. Functional module according to any of Claims 1 to 5, **characterised by** the fact that the mating plug-in contact elements of at least one of the mating connector constituents (14) is surrounded by a recess.

7. Functional module according to any of Claims 1 to 6, **characterised by** the fact that the support (1) forms at least an integrated section (11) of the encasement of the basic functional unit (2).

8. Functional module according to any of Claims 1 to 7, **characterised by** the fact that the basic functional unit (2) is designed as a so-called steering column switch featuring an operating lever.

9. Functional module according to any of Claims 1 to 8, **characterised by** the fact that at least one satellite functional unit (3) is executed as a steer angle sensor.

10. Functional module according to any of Claims 1 to 9, **characterised by** the fact that at least one satellite functional unit (3) is executed as a so-called helix cable cartridge that effects, inter alia, the contacting of the airbag.

11. Functional module according to any of Claims 1 to 10, **characterised by** the fact that at least one satellite functional unit (3) is designed as a switch featuring at least one button-shaped operating element.

12. Functional module according to any of Claims 1 to 11, **characterised by** the fact that the encasement (4) surrounding the functional units (2, 3) is positioned directly on the support (1).

13. Functional module according to any of Claims 1 to 12, **characterised by** the fact that a clip-type fastening device that exercises clamping forces on the steering column tube (5) and is operated by a screw (10) is provided as a moulded-on part of the support (1).

14. Functional module according to Claim 13, **characterised by** the fact that an opening (7) is provided in the encasement (4) through which a screw driver can be inserted for the purpose of operating the screw (10).

15. Functional module according to any of Claims 1 to 14, **characterised by** the fact that at least one printed circuit board is provided inside the plate-like distribution device (15) that features several printed conductors and establishes the connection between the functional units (2, 3) and the on-board system of the motor vehicle.

16. Functional module according to Claim 15, **characterised by** the fact that the printed circuit board is executed in so-called punched grid technique.

17. Functional module according to Claim 15, **characterised by** the fact that the printed conductors of the printed circuit board are designed as a copper-clad structure.

18. Functional module according to any of Claims 15 to 17, **characterised by** the fact that several electronic components are assigned to the printed circuit board of the distribution device (15).

19. Functional module according to Claim 18, **characterised by** the fact that at least one of the electronic components is designed as a micro-computer.

20. Functional module according to any of Claims 1 to 19, **characterised by** the fact that the distribution device (15) is designed as a so-called bus node and consequently includes an interface facility to the data bus of the motor vehicle.

## Revendications

1. Module fonctionnel avec plusieurs unités fonctionnelles prévues dans le domaine de la colonne de direction d'un véhicule automobile, au-dessous du volant, dans un plan perpendiculaire à la colonne de direction, qui, entourées par un boîtier commun, consistent en une unité fonctionnelle de base (2) fixé par adhérence et / ou mécaniquement au tube enjoliveur (3) de la colonne de direction, par l'intermédiaire d'un support 1, et d'au moins une autre unité fonctionnelle satellite (3) fixée au support (1), les unités fonctionnelles individuelles étant reliées au réseau de bord par l'intermédiaire d'éléments de raccordement associés, **caractérisé en ce que** , sur le support (1), est fixé un appareil de distribution (15) en forme de plaquette qui, orienté perpendiculairement à la colonne de direction en embrassant celle-ci au moins partiellement, est associé, par sa face supérieure, au côté des unités fonctionnelles (2, 3) opposé au volant, et **en ce que** le côté de chaque unité fonctionnelle (2, 3), orienté à l'opposé du volant, est équipé d'éléments de connexion à fiches (13) qui peuvent être couplés avec des éléments de connexion à contre-fiches (14), prévus directement sur l'appareil de distribution en forme de plaque (15), et **en ce qu'**un seul connecteur enfichable (16), est prévu sur la face inférieure de l'appareil de distribution (15), orientée à l'opposé du volant, lequel connecteur présente tous les éléments de contact nécessaire au raccordement au réseau de bord.

2. Module fonctionnel selon la revendication 1, **caractérisé en ce qu'**une unité fonctionnelle (2, 3) au moins comprend au moins un élément de contact enfichable (17) qui est conduit directement, sans interruption, dans l'agencement de connecteurs enfichables (16), prévu sur la surface inférieure du distributeur (15) en forme de plaque, et peut entrer en contact direct avec un élément de contact à contre-fiche associé à l'élément de raccordement (19).

3. Module fonctionnel selon la revendication 1 ou 2, **caractérisé en ce que** l'agencement de connecteurs enfichables (16), disposé sur le côté inférieur de l'appareil de distribution (15) en forme de plaquette et présentant plusieurs éléments de contact enfichables, est prévu pour le couplage d'un unique élément de raccordement (19) présentant plusieurs éléments de contact enfichables.

4. Module fonctionnel selon l'une des revendications 1 à 3, **caractérisé en ce qu'**au moins l'une des unités fonctionnelles (2, 3) comprend un élément de connecteur enfichable (13) dont les éléments de contact enfichables sont entourés d'un collet protecteur commun.

5. Module fonctionnel selon l'une des revendications 1 à 4, **caractérisé en ce que** les éléments de contact enfichables de l'agencement de connecteurs enfichables (16), prévu sur le côté inférieur de l'appareil de distribution (15) sont entourés d'un collet de protection commun.

6. Module fonctionnel selon l'une des revendications 1 à 5, **caractérisé en ce que** les éléments de contact enfichables d'au moins l'un des éléments de connexion à contre-fiches (14) sont entourés par une cavité.

7. Module fonctionnel selon l'une des revendications 1 à 6, **caractérisé en ce que** le support (1) forme, d'une pièce, au moins une partie (11) du boîtier de l'unité fonctionnelle de base (2).

8. Module fonctionnel selon l'une des revendications 1 à 7, **caractérisé en ce que** l'unité fonctionnelle de base (2) est exécutée sous la forme d'un commutateur fixé à la colonne de direction qui présente un levier de commande.

9. Module fonctionnel selon l'une des revendications 1 à 8, **caractérisé en ce qu'**une unité fonctionnelle satellite (3) au moins est exécutée en tant que détecteur d'angle de direction.

10. Module fonctionnel selon l'une des revendications 1 à 9, **caractérisé en ce qu'**une unité fonctionnelle satellite (3) au moins est exécutée en tant que coffret dit à câble spiralé, établissant, entre autre, le contact avec l'airbag.

11. Module fonctionnel selon l'une des revendications 1 à 10, **caractérisé en ce qu'**une unité fonctionnelle satellite (3) au moins est exécuté en tant que commutateur présentant au moins un élément de commande en forme de touche.

12. Module fonctionnel selon l'une des revendications 1 à 11, **caractérisé en ce que** le boîtier (4), qui entourent les unités fonctionnelles (2, 3), est fixé directement au support (1).

13. Module fonctionnel selon l'une des revendications 1 à 12, **caractérisé en ce qu'**est prévu un dispositif de fixation en forme de collier, formé d'une pièce à partir du support (1), lequel, actionné par une vis (10), exerce des forces de serrage sur le tube enjoliveur (5).

14. Module fonctionnel selon la revendication 13, **caractérisé en ce que**, dans le boîtier (4), est pratiquée une ouverture (7) par laquelle un tournevis peut être introduit pour actionner la vis (10).

15. Module fonctionnel selon l'une des revendications 1 à 14, **caractérisé en ce que**, dans l'espace intérieur de l'appareil de distribution (15) en forme de plaque, est prévue au moins une plaquette de circuits imprimés qui, présentant plusieurs pistes conductrices, établit la connexion entre les unités fonctionnelles (2, 3) et le réseau de bord du véhicule automobile.

16. Module fonctionnel selon la revendication 15, **caractérisé en ce que** la plaquette de circuits imprimés est exécutée selon la technique dite de grillage estampé.

17. Module fonctionnel selon la revendication 15, **caractérisé en ce que** les pistes conductrices de la plaquette de circuits imprimés sont réalisées en tant que structures revêtues de cuivre.

18. Module fonctionnel selon l'une des revendications 15 à 17, **caractérisé en ce que** plusieurs composants électroniques sont associés à la plaquette de circuits imprimés de l'appareil de distribution (15).

19. Module fonctionnel selon la revendication 18, **caractérisé en ce qu'**au moins l'un des constituants électroniques est conçu en tant que micro-ordinateur.

20. Module fonctionnel selon l'une des revendications 1 à 19, **caractérisé en ce que** l'appareil de distribution (15) est conçu en tant que noeud de bus et offre ainsi une possibilité de raccordement au bus de données du véhicule automobile.
